# EUROPEAN PATENT APPLICATION

(11) **EP 4 621 142 A1**
(43) Date of publication of application: **24.09.2025**
(21) Application number: 24180128.1
(22) Date of filing: 05.06.2024
(51) Int. Cl.: E02F 9/22

(54) **WORKING VEHICLE AND CONTROL METHOD FOR WORKING VEHICLE**

(30) Priority: 21.03.2024 JP 2024044449
(71) Applicant: Takeuchi Mfg. Co., Ltd., Nagano 389-0605 (JP)
(72) Inventor: NONOMURA, Kengo, Nagano, 389-0605 (JP); WATANABE, Takahiro, Nagano, 389-0605 (JP); SATO, Tomonori, Nagano, 389-0605 (JP)
(74) Representative: TBK

(57) **Abstract**

A working vehicle (1) includes an engine (20), a hydraulic pump (32), a travel unit (6), a working unit (9), an ECU (30) and a vehicle-controller (7). The vehicle-controller (7) transmits a control command of a standard mode to the ECU (30) when the travel unit (6) stopped and a first period (T1) is elapsed, with a discharge pressure from the hydraulic pump (32) being equal to or higher than a reference value (Ul), an engine load factor being equal to or higher than a predetermined upper limit (El), the vehicle-controller (7) transmits the control command of the economy mode to the ECU (30) when a second period (T2) is elapsed, with the engine load factor being equal to or lower than a predetermined lower limit, and the vehicle-controller (7) transmits the control command of the standard mode to the ECU (30) when the travel unit (6) is operated.

## Description

### Technical Field

The present invention relates to a working vehicle using an engine as a drive source and a control method for a working vehicle.

### Background Art

In the related art, a working vehicle capable of selecting an economy mode has been proposed (PTL 1: JP2011-001896A and PTL 2: JP2015-094070A).

### Summary of Invention

### Technical Problem

In some cases, the economy mode is set in order to suppress the fuel consumption. However, when a large work power, such as digging, is required during work in the economy mode, an operator needs to manually switch to a standard mode. On the other hand, when work is continued in the standard mode, energy is consumed wastefully. As a result, there is a problem that the fuel consumption is deteriorated.

### Solution to Problem

The present invention is made in view of the above circumstances, and an object of the present invention is to provide a working vehicle in which fuel consumption can be improved by controlling to switch between an economy mode and a standard mode at an appropriate time and troublesomeness of an operator to manually switch between the standard mode and the economy mode can be eliminated.

The present invention solves the above-described problems by a solution disclosed below as an embodiment.

A working vehicle according to the present invention includes: an engine; a first hydraulic pump and a second hydraulic pump which are operated by the engine; a travel unit operated by the first hydraulic pump; a working unit operated by the second hydraulic pump; an operation unit configured to operate the travel unit and the working unit; an ECU configured to control an engine output; and a vehicle-controller configured to transmit a control command of an economy mode or a control command of a standard mode to the ECU.

The vehicle-controller transmits the control command of the standard mode to the ECU when the travel unit stopped and a first period is elapsed, with a discharge pressure from the second hydraulic pump being equal to or higher than a reference value, an engine load factor being equal to or higher than a predetermined upper limit, the vehicle-controller transmits the control command of the economy mode to the ECU when a second period is elapsed, with the engine load factor being equal to or lower than a predetermined lower limit, and the vehicle-controller transmits the control command of the standard mode to the ECU when the travel unit is operated. The ECU is an engine control unit. Alternatively, the ECU is an electronic control unit.

According to this configuration, when a large work power is required, the mode can be promptly switched to the standard mode. Then, when a small work power is sufficient, the mode can be promptly switched to the economy mode, and thereby the fuel consumption can be improved. In addition, troublesomeness of an operator having to manually switch between the standard mode and the economy mode is eliminated, and thereby the operability gets better.

As an example, the working vehicle further includes a selection switch that enables the control command of the economy mode and the control command of the standard mode by the vehicle-controller, in which the vehicle-controller selects the control command of the economy mode and the control command of the standard mode, and transmits the selected control commands to the ECU when the selection switch is enabled. According to this configuration, when a large work power is required, necessary work power can be secured regardless of the engine load factor. Therefore, the operability gets better.

As an example, when the ECU receives the control command of the economy mode to perform the control in the economy mode, the ECU suppress an upper limit of an engine rotation speed to a range of 0.75 times to 0.95 times during control in the standard mode. According to this configuration, when the control is performed in the economy mode, the fuel consumption can be suppressed within a range in which the workability is not impaired.

As an example, the first period is set to 0.2 to 0.7 seconds. According to this configuration, when a large work power is required, the mode can be promptly changed to the standard mode. In addition, it is possible to prevent the mode from being the standard mode, which is not originally necessary, due to temporary high pressure during initial operation or the like. As an example, the second period is set to 0.8 to 1.4 seconds. According to this configuration, when a large work power is not required within a range in which the workability is not impaired, the mode can be promptly changed to the economy mode.

As an example, the vehicle-controller transmits the control command of the economy mode and the control command of the standard mode to the ECU by using the engine load factor calculated by the ECU based on a fuel injection factor of the engine. According to this configuration, when a large torque is not required, the mode can be promptly changed to the economy mode.

A control method for a working vehicle according to the present invention, the working vehicle including an engine, a first hydraulic pump and a second hydraulic pump which are operated by the engine, a travel unit operated by the first hydraulic pump, a working unit operated by the second hydraulic pump, an operation unit configured to operate the travel unit and the working unit, an ECU configured to control an engine output, and a vehicle-controller configured to transmit a control command of an economy mode or a control command of a standard mode to the ECU.

The control method includes: the vehicle-controller transmits the control command of the standard mode to the ECU when the travel unit stopped and a first period is elapsed, with a discharge pressure from the second hydraulic pump being equal to or higher than a reference value, an engine load factor being equal to or higher than a predetermined upper limit, the vehicle-controller transmits the control command of the economy mode to the ECU when a second period is elapsed, with the engine load factor being equal to or lower than a predetermined lower limit, and the vehicle-controller transmits the control command of the standard mode to the ECU when the travel unit is operated.

According to this configuration, in the working vehicle, when a large work power is required, the mode can be promptly switched to the standard mode. Then, when a small work power is sufficient, the mode can be promptly switched to the economy mode, and thereby the fuel consumption can be improved. In addition, troublesomeness of an operator having to manually switch between the standard mode and the economy mode is eliminated, and thereby the operability gets better.

### Advantageous Effects of Invention

According to the present invention, a working vehicle is realized in which fuel consumption can be improved by controlling to switch between an economy mode and a standard mode at an appropriate time and troublesomeness of an operator to manually switch between the standard mode and the economy mode can be eliminated.

### Brief Description of Drawings

Fig. 1 is a schematic perspective view showing an example of a working vehicle according to the present embodiment.
Fig. 2 is a schematic circuit diagram showing an example of a drive control system in the working vehicle shown in Fig. 1.
Fig. 3 is a schematic flowchart showing an example of a control procedure of switching between an economy mode and a standard mode in the working vehicle shown in Fig. 1.
Fig. 4 is a schematic graph showing an example of a control operation of switching between the economy mode and the standard mode in the working vehicle shown in Fig. 1.

### Description of Embodiments

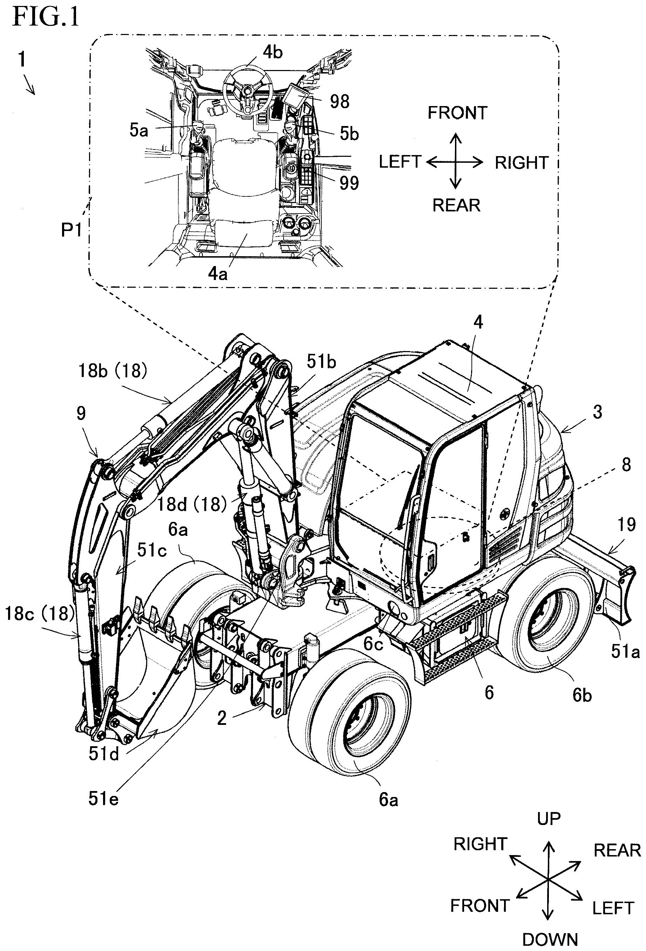

Hereinafter, an embodiment according to the present invention will be described in detail with reference to the drawings. Fig. 1 is a schematic view showing an example of a working vehicle 1 according to the present embodiment, and is a perspective view from an upper left front part. The working vehicle 1 includes a travel unit 6 and a slewing unit 8. For convenience of description, an arrow may indicate an up, down, left, right, front, or rear direction in the drawing. In all drawings for describing the embodiment, the same reference numerals will be assigned to members having the same function, and repeated description thereof may be omitted in some cases.

As the working vehicle 1 according to the present embodiment, a wheel-type hydraulic excavator will be described as an example. As a configuration other than the above, a track loader, a track dumper, or the like can be applied to the working vehicle 1.

As shown in Fig. 1, the working vehicle 1 includes a lower body 2 that is capable of traveling, an upper body 3 that is disposed on the lower body 2 and is capable of slewing, a working unit 9 that is attached to the upper body 3, and a cab 4 that is disposed on the upper body 3. An operation unit 5, on which an operator boards and operates various types of work including traveling, slewing, and digging, is provided in the cab 4. Here, a portion surrounded by a one-dot chain line P1 in the drawing is a schematic configuration diagram of the inside of the cab 4 as viewed from above.

The cab 4 includes an operator-seat 4a on which the operator boards and sits, a display unit 98 disposed in front of the right side of the operator-seat 4a, and a selection switch 99 disposed in rear of the right side of the operator-seat 4a. The display unit 98 has a configuration capable of displaying operation information of the travel unit 6, the slewing unit 8, the working unit 9, and a blade unit 19, and vehicle information. The selection switch 99 is a push button that can be selected by sequentially switching a standard mode, an economy mode, or a switching mode.

When the selection switch 99 is operated, the control of switching the modes in the order of the standard mode, the economy mode, and the switching mode is performed. As an example, it is displayed on the display unit 98 whether the state is in the standard mode, the economy mode, or the switching mode.

As an example, in the standard mode, an icon is not displayed on the display unit 98. In the economy mode, an icon with a leaf pattern is displayed on the display unit 98. In the switching mode, an icon in which the leaf pattern and a plus sign are combined is displayed on the display unit 98.

The cab 4 includes the operation unit 5 operated by the operator. The operator operates the operation unit 5 to operate the travel unit 6, the slewing unit 8, the working unit 9, the blade unit 19, or other working units.

As an example, the slewing unit 8 or an arm 51c is operated by operating a left side control-lever 5a. As an example, the upper body 3 slews counterclockwise by moving the left side control-lever 5a in a left direction, and a slewing speed is accelerated or decelerated according to an operation amount of the left side control-lever 5a. As an example, the upper body 3 slews clockwise by moving the left side control-lever 5a in a right direction, and the slewing speed is accelerated or decelerated according to the operation amount of the left side control-lever 5a. As an example, a boom 51b or a bucket 51d is operated by operating a right side control-lever 5b.

As an example, the travel unit 6 includes a pair of front wheels 6a on the left and right and a pair of rear wheels 6b on the left and right. The upper body 3 of the working vehicle 1 has a pair of headlights 6c on the left and right that illuminate the front. The cab 4 includes a steering wheel 4b that is operated by the operator. As an example, the working vehicle 1 is a four-wheel drive vehicle that can self-travel on a public road. The operation unit 5 includes a blade lever, a traveling pedal, a brake pedal, and a boom swing/second boom pedal (not shown).

The working vehicle 1 includes the working unit 9 and the blade unit 19 that are operated by hydraulic oil (pressure oil). The working unit 9 includes the boom 51b, the arm 51c, and the bucket 51d. The boom 51b is attached to the upper body 3 so as to be swingable in the up-down direction or in the up-down direction including a front-rear component.

As an example, a boom bracket 51e is provided between the upper body 3 and the boom 51b. The boom 51b swings with respect to the upper body 3 in the up-down direction by a boom cylinder 18d. The boom 51b swings with respect to the upper body 3 in the left-right direction or the left-right direction including the front-rear component by the boom bracket 51e. For example, the boom 51b swings with respect to the upper body 3 in the left-right direction by a swing cylinder (not shown).

The arm 51c swings with respect to the boom 51b in the up-down direction by an arm cylinder 18b. The bucket 51d swings with respect to the arm 51c in the up-down direction by a bucket cylinder 18c. Here, the bucket 51d may be changed to another work attachment.

The blade unit 19 includes a blade 51a. The blade 51a swings with respect to the lower body 2 in the up-down direction by a blade cylinder 18a.

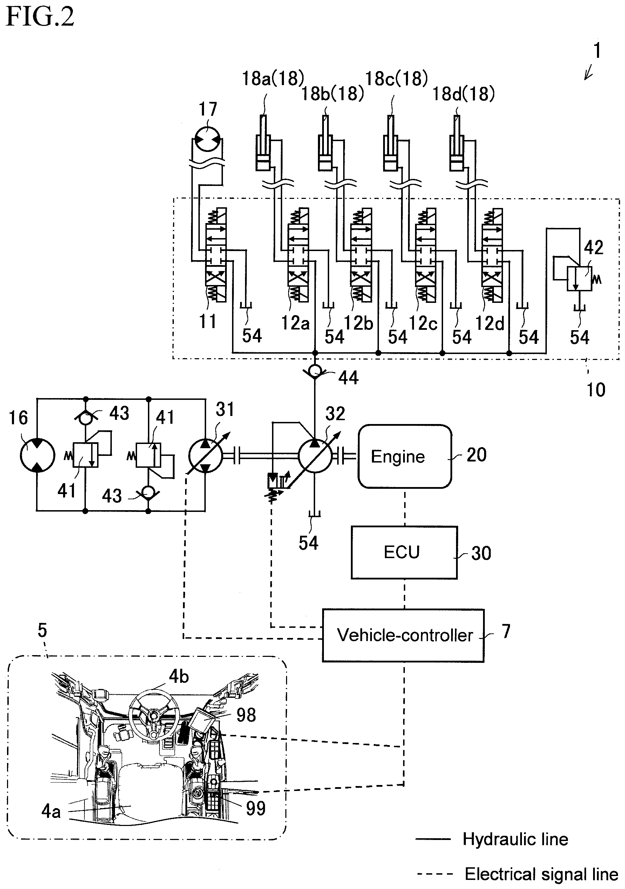

Fig. 2 is a schematic circuit diagram showing an example of the drive control system in the working vehicle 1. A solid line in the drawing shows connection of a hydraulic system in a simplified manner, and a broken line in the drawing shows connection of an electric signal system in a simplified manner. In the connection of the hydraulic system or the electric signal system, descriptions other than main parts are omitted.

The travel unit 6 according to the present embodiment includes a hydrostatic transmission (hereinafter, abbreviated as HST). A driving source of the first hydraulic pump 31 is an engine 20. As an example, a first hydraulic pump 31 is a variable capacity type swash plate pump. A hydraulic motor 16 for traveling is coupled to a gear case, and power is transmitted from the gear case to a rear wheel-side axle, and power is further transmitted to the rear wheels 6b on the left and right. In addition, power is transmitted from the gear case to a front wheel-side axle via a propeller shaft, and power is further transmitted to the front wheels 6a on the left and right (not shown). The above-described configuration is an example, and a travel unit 6 that does not have the HST can also be used.

When the operator operates the selection switch 99, an output mode signal is transmitted to a vehicle-controller 7. The vehicle-controller 7 that has received the output mode signal transmits a predetermined control command to an ECU 30. When the standard mode is selected by the selection switch 99, the vehicle-controller 7 transmits a control command of the standard mode to the ECU 30. In a case where the economy mode is selected by the selection switch 99, the vehicle-controller 7 transmits a control command of the economy mode to the ECU 30. When the switching mode (also referred to as an eco plus mode) is selected by the selection switch 99, the vehicle-controller 7 selects and transmits any one of the control command of the standard mode or the control command of the economy mode to the ECU 30 according to the engine load factor obtained by the communication from the ECU 30 and the pump pressure obtained by the detection signal from the pressure sensor.

The vehicle-controller 7 is signal-connected to the ECU 30 and can communicate with each other. As an example, a communication protocol related to the vehicle control including the vehicle-controller 7 or the ECU 30 is a controller area network (hereinafter, abbreviated as CAN).

The vehicle-controller 7 transmits a selection signal to the ECU 30 in accordance with a pressing operation of the selection switch 99 by the operator. The above-described configuration is an example, and a configuration can also be adopted in which the selection signal is transmitted by a touch operation of the touch panel type display unit 98.

The working vehicle 1 includes the hydraulic motor 16 for traveling, a hydraulic motor 17 for slewing, the blade cylinder 18a, the arm cylinder 18b, the bucket cylinder 18c, the boom cylinder 18d as a hydraulic cylinder 18, and other known hydraulic cylinders. In addition, the working vehicle 1 includes a connection port for hydraulically operating various attachments attached thereto as an option (not shown). The working vehicle 1 includes a lead-acid battery that supplies power to the vehicle-controller 7 and the ECU 30, respectively, during the start (not shown).

The working vehicle 1 includes the first hydraulic pump 31 and the hydraulic motor 16 for traveling that is operated by the pressure oil from the first hydraulic pump 31. In the example of Fig. 2, a first check valve 43 is provided on each of both output sides of the first hydraulic pump 31, and a first relief valve 41 is provided on each of output sides of the first check valve 43.

The working vehicle 1 includes a second hydraulic pump 32 and the hydraulic motor 17 for slewing that is operated by the pressure oil from the second hydraulic pump 32. In the example of Fig. 2, the hydraulic motor 17 for slewing is connected to a secondary side of a control valve 11 for the hydraulic motor. The driving source of the second hydraulic pump 32 is the engine 20.

As an example, in a control valve unit 10, respective primary sides of the control valve 11 for the hydraulic motor for slewing, a control valve 12a for the hydraulic cylinder, a control valve 12b for the hydraulic cylinder, a control valve 12c for the hydraulic cylinder, a control valve 12d for the hydraulic cylinder, and a second relief valve 42 are connected in parallel to each other. A secondary side of the second relief valve 42 is a return flow passage, and the hydraulic oil having a pressure higher than a set pressure returns to a hydraulic oil tank 54. The number of various control valves constituting the control valve unit 10 may be increased or decreased, and a service port control valve may be included as necessary.

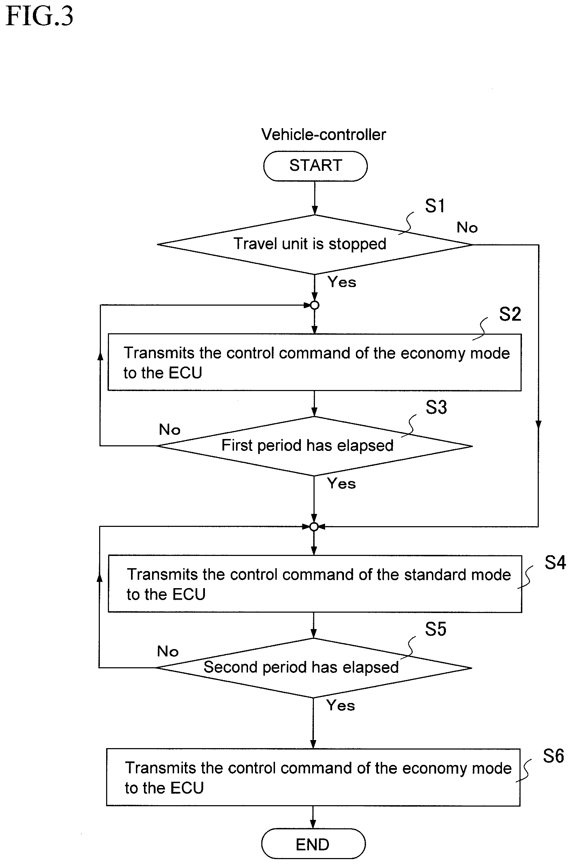

Fig. 3 is a schematic flowchart showing an example of a control procedure related to the switching mode in the working vehicle 1. Subsequently, an example of the control related to the switching mode will be described below.

### [Example of Control Relating to Switching Mode]

When the switching mode is selected by the operation of the selection switch 99, the vehicle-controller 7 transmits the control command of the economy mode and the control command of the standard mode to the ECU 30 by using the engine load factor calculated by the ECU 30 based on a fuel injection factor of the engine 20. When control is performed in the economy mode, the ECU 30 performs control of suppressing an upper limit of a rotation speed of the engine 20 to a range of 0.75 times to 0.95 times during the standard mode.

In step S 1 of Fig. 3, the vehicle-controller 7 determines whether the travel unit 6 is stopped. Then, when the travel unit 6 is stopped, the process proceeds from step S1 to step S2. On the other hand, when the travel unit 6 is operated, the process proceeds from step S1 to step S4.

In step S2 of Fig. 3, the vehicle-controller 7 transmits the control command of the economy mode to the ECU 30. Then, the process proceeds from step S2 to step S3.

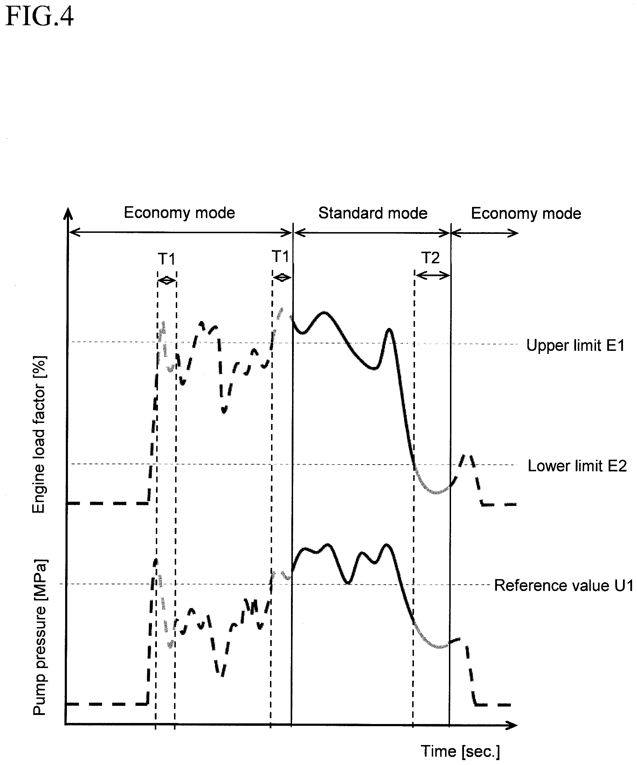

A first period T1 is set to 0.2 to 0.7 seconds. In the example of Fig. 4, the first period T1 is set to 0.4 seconds. A second period T2 is set to 0.8 to 1.4 seconds. In the example of Fig. 4, the second period T2 is set to 1.0 second.

In step S3 of Fig. 3, when a discharge pressure from the second hydraulic pump 32 is equal to or higher than a reference value U1 and the engine load factor is equal to or higher than an upper limit E1 and the first period T1 elapsed, the process proceeds from step S3 to step S4. On the other hand, when the discharge pressure from the second hydraulic pump 32 is equal to or higher than the reference value U1 and the first period T1 has not elapsed, or when the engine load factor is equal to or higher than the upper limit E1 and the first period T1 has not elapsed, the process returns to step S2 from step S3.

In step S4 of Fig. 3, the vehicle-controller 7 transmits the control command of the standard mode to the ECU 30 regardless of the engine load factor. Then, the process proceeds from step S4 to step S5.

In step S5 of Fig. 3, when the engine load factor is equal to or less than the lower limit E2 and the second period T2 elapsed, the process proceeds from step S5 to step S6. On the other hand, when the engine load factor is equal to or less than the lower limit E2 and the second period T2 has not elapsed, the process returns from step S5 to step S4.

The second period T2 is set to 0.8 to 1.4 seconds. In the example of Fig. 4, the second period T2 is set to 1.0 second.

In step S6 of Fig. 3, the vehicle-controller 7 transmits the control command of the economy mode to the ECU 30. Then, when desired work is completed by the working unit 9 or the blade unit 19, the series of control operations are terminated.

According to the present embodiment, when a large work power is required, the mode can be promptly changed to the standard mode. In addition, when a large work power is not required within a range in which the workability is not impaired, the mode can be promptly changed to the economy mode.

In some cases, the driving source of the working vehicle 1 is not only the engine but also a hybrid configuration in which the engine and an electric motor are used in combination. The travel unit 6 is not limited to a configuration including a wheel, and may have a configuration including a crawler. As described above, the working vehicle 1 may be appropriately changed according to specifications or the like.

## Claims

1. A working vehicle (1) comprising:
an engine (20);
a first hydraulic pump (31) and a second hydraulic pump (32) which are operated by the engine (20);
a travel unit (6) operated by the first hydraulic pump (31);
a working unit (9) operated by the second hydraulic pump (32);
an operation unit (5) configured to operate the travel unit (6) and the working unit (9);
an ECU (30) configured to control an engine output; and
a vehicle-controller (7) configured to transmit a control command of an economy mode or a control command of a standard mode to the ECU (30),
wherein the vehicle-controller (7) transmits the control command of the standard mode to the ECU (30) when the travel unit (6) stopped and a first period (T1) is elapsed, with a discharge pressure from the second hydraulic pump (32) being equal to or higher than a reference value (U1), an engine load factor being equal to or higher than a predetermined upper limit (E1),
the vehicle-controller (7) transmits the control command of the economy mode to the ECU (30) when a second period (T2) is elapsed, with the engine load factor being equal to or lower than a predetermined lower limit, and
the vehicle-controller (7) transmits the control command of the standard mode to the ECU (30) when the travel unit (6) is operated.

2. The working vehicle (1) according to claim 1, further comprising:
a selection switch (99) that enables the control command of the economy mode and the control command of the standard mode by the vehicle-controller (7),
wherein the vehicle-controller (7) selects the control command of the economy mode and the control command of the standard mode, and transmits the selected control commands to the ECU (30) when the selection switch (99) is enabled.

3. The working vehicle (1) according to claim 1 or 2, wherein when the ECU (30) receives the control command of the economy mode to perform control in the economy mode, the ECU (30) suppress an upper limit of an engine rotation speed to a range of 0.75 times to 0.95 times when performing control in the standard mode.

4. The working vehicle (1) according to any one of claims 1 to 3, wherein the first period (T 1) is set to 0.2 to 0.7 seconds, and the second period (T2) is set to 0.8 to 1.4 seconds.

5. The working vehicle (1) according to any one of claims 1 to 4, wherein the vehicle-controller (7) transmits the control command of the economy mode and the control command of the standard mode to the ECU (30) by using the engine load factor calculated by the ECU (30) based on a fuel injection factor of the engine (20).

6. A control method for a working vehicle (1) including an engine (20), a first hydraulic pump (31) and a second hydraulic pump (32) which are operated by the engine (20), a travel unit (6) operated by the first hydraulic pump (31), a working unit (9) operated by the second hydraulic pump (32), an operation unit (5) configured to operate the travel unit (6) and the working unit (9), an ECU (30) configured to control an engine output, and a vehicle-controller (7) configured to transmit a control command of an economy mode or a control command of a standard mode to the ECU (30),
the control method comprising:
wherein the vehicle-controller (7) transmits the control command of the standard mode to the ECU (30) when the travel unit (6) stopped and a first period (T1) is elapsed, with a discharge pressure from the second hydraulic pump (32) being equal to or higher than a reference value (U1), an engine load factor being equal to or higher than a predetermined upper limit (E1),
the vehicle-controller (7) transmits the control command of the economy mode to the ECU (30) when a second period (T2) is elapsed, with the engine load factor being equal to or lower than a predetermined lower limit, and
the vehicle-controller (7) transmits the control command of the standard mode to the ECU (30) when the travel unit (6) is operated.

7. The control method for a working vehicle (1) according to claim 6, wherein the vehicle-controller (7) transmits the control command of the economy mode and the control command of the standard mode to the ECU (30) by using the engine load factor calculated by the ECU (30) based on a fuel injection factor of the engine (20).
